# EUROPEAN PATENT APPLICATION

(11) **EP 2 487 378 A1**
(43) Date of publication of application: **15.08.2012**
(21) Application number: 10821952.8
(22) Date of filing: 04.10.2010
(51) Int. Cl.: F16D 1/06, B60N 2/06, B60N 2/44, F16D 1/02

(54) **ROTATION TRANSMITTING MEMBER**

(30) Priority: 08.10.2009 JP 2009234003
(71) Applicant: Shiroki Corporation, Fujisawa-shi, Kanagawa 252-0811 (JP)
(72) Inventor: TANAKA, Isao, Fujisawa-shi Kanagawa 252-0811 (JP); MARUYAMA, Hiroshi, Fujisawa-shi Kanagawa 252-0811 (JP)
(74) Representative: Henkel, Breuer & Partner
(86) International application number: PCT/JP2010/067343
(87) International publication number: WO 2011/043282

(57) **Abstract**

With the aim of providing a rotation transmitting member that suppresses the occurrence of abnormal noises, a rotation transmitting member includes a fitting portion (23) formed at an end portion and having an irregular shaped cross section to be fitted into a hole having an irregular shaped cross section and a heat-shrinkable tube (41) covering the fitting portion (23). A shrink portion (43) of the heat-shrinkable tube (41) caused to shrink by heat so as to firmly adhere to an outer surface of the fitting portion (23) is formed on a tip end side of the fitting portion (23). A non-shrink portion (45) of the heat-shrinkable tube (41) not subjected to heat shrinkage is formed on a base end side of the fitting portion (23) .

## Description

### Background of the Invention

### Field of the Invention

The present invention relates to a rotation transmitting member including a fitting portion formed at an end portion and having an irregular shaped cross section, and configured to fit the fitting portion into a hole having an irregular shaped cross section.

### Description of the related art

For example, in a power seat apparatus in which a seat is moved in a front-back direction by a motor, power is transmitted between the motor and a drive mechanism driving the seat in a front-back direction using a rotation transmitting member, such as a flexible shaft.

By forming a fitting portion having an irregular shaped cross section at an end portion of the rotation transmitting member and fitting the fitting portion into a hole having an irregular shaped cross section and formed in the motor or a member of the drive mechanism, power transmission from the motor to the rotation transmitting member and power transmission from the rotation transmitting member to the drive mechanism are performed (see, for example, Patent Document 1). Although it is not described in Patent Document 1, by covering the fitting portion of the rotation transmitting member with a heat-shrinkable tube and causing the heat-shrinkable tube to shrink by heat, abnormal noises (metal contact sounds) occurring between the rotation transmitting member and the hole are reduced.

### Related Art Document

### Patent Document

Patent Document 1: JP-L1M-A-64-44843

### Brief Summary of the Invention

### Problems to be solved by the Invention

However, even when the fitting portion of the rotation transmitting member is covered with a heat-shrinkable tube and the heat-shrinkable tube is caused to shrink by heat, there is a problem that abnormal noises occur in a case where the motor rotates at a high speed or where a clearance is generated between an outer peripheral surface of the fitting portion and an inner peripheral surface of the hole due to poor dimensional accuracy of the fitting portion and the hole.

An object of the invention is to provide a rotation transmitting member that suppresses an occurrence of abnormal noises.

### Means for solving the problems

The present disclosure is directed to a rotation transmitting member that includes a fitting portion formed at an end portion and having an irregular shaped cross section to be fitted into a hole having an irregular shaped cross section and a heat-shrinkable tube covering the fitting portion, and is characterized in that a shrink portion of the heat-shrinkable tube caused to shrink by heat so as to firmly adhere to an outer surface of the fitting portion is formed on a tip end side of the fitting portion, and a non-shrink portion of the heat-shrinkable tube not subjected to heat shrinkage is formed on a base end side of the fitting portion.

According to the present disclosure, the rotation transmitting member is characterized in that the heat-shrinkable tube has a displacement stopping portion inhibiting the heat-shrinkable tube from undergoing displacement with respect to the fitting portion when the fitting portion is inserted into the hole.

Furthermore, according to the present disclosure, the rotation transmitting member is characterized in that the rotation transmitting member is a flexible shaft.

### Advantages of the Invention

According to the present disclosure, by providing the heat-shrinkable tube to cover the fitting portion and forming the shrink portion by causing the heat-shrinkable tube to shrink by heat so as to firmly adhere to the outer surface of the fitting portion on the tip end side of the fitting portion and the non-shrink portion not subjected to heat shrinkage on the base end side, even in a case where there is a large clearance between an outer peripheral surface of the fitting portion and an inner peripheral surface of the hole when the rotation transmitting member is fitted into the hole, the non-shrink portion of the heat-shrinkable tube is pressed against and in contact with an inner surface of the hole, thereby absorbing the clearance between the both peripheral surfaces at the time of fitting. Hence, the occurrence of abnormal noises is suppressed.

### Brief Description of the Drawings

Fig. 1 is a view used to describe a rotation transmitting member of an embodiment.
Fig. 2 is a cross section taken on line II-II of Fig. 1.
Fig. 3 is a cross section taken on line III-III of Fig. 1.
Fig. 4 is a view used to describe an overall configuration of a seat provided with the rotation transmitting member of the embodiment.

### Detailed Description of the Invention

An embodiment of the invention will now be described using the drawings.

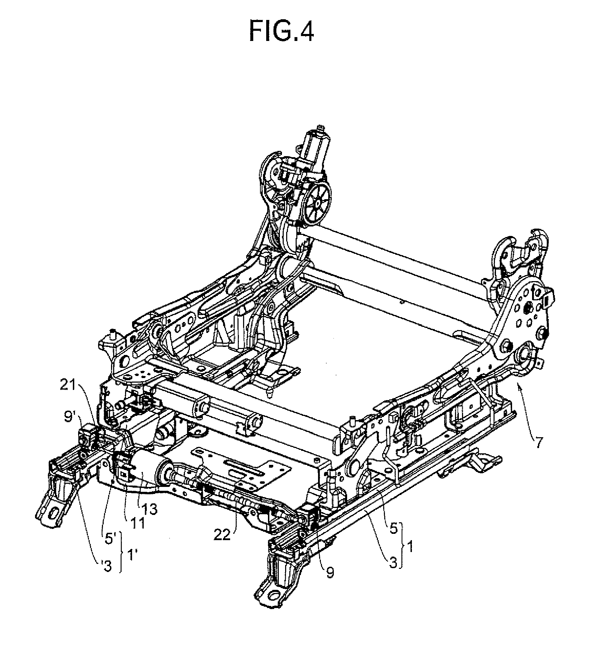

Firstly, an overall configuration of a seat provided with a rotation transmitting member of the embodiment will be described using Fig. 4. Referring to the drawing, a pair of seat tracks 1 and 1' is provided between a seat and a floor. The seat tracks 1 and 1' are respectively formed of lower rails 3 and 3' provided on the floor side and upper rails 5 and 5' engaged with the lower rails 3 and 3', respectively, in a movable manner. The upper rails 5 and 5' are provided with a seat main body 7 formed of a seat cushion frame, a seat back frame, and the like.

Unillustrated threaded rods are provided in the upper rails 5 and 5' along a longitudinal direction in a rotatable manner. Also, unillustrated nuts members threaded into the threaded rods in the upper rails 5 and 5' are attached in the lower rails 3 and 3'. Further, gear boxes 9 and 9' driving the threaded rods are provided on the upper rails 5 and 5', respectively.

A bracket 11 is provided between the upper rails 5 and 5' so as to bridge between the both upper rails 5 and 5'. A seat track driving motor 13 is installed on the bracket 11. The motor 13 has two output shafts.

It is configured in such a manner that power of the motor 13 is transmitted to the gear box 9 by an unillustrated flexible shaft (rotation transmitting member) connected to one output shaft (output shaft on the side of the seat track 1) of the motor 13 at one end and connected to an input portion of the gear box 9 at the other end. The unillustrated flexible shaft is provided in an outer tube 22 connecting the motor 13 and the gear box 9 and therefore invisible in the drawing. Also, it is configured in such a manner that power of the motor 13 is transmitted to the gear box 9' by a flexible shaft (rotation transmitting member) 21 connected to the other output shaft (output shaft on the side of the seat track 1') of the motor 13 at one end and connected to an input portion of the gear box 9' at the other end.

Accordingly, when the motor 13 is driven, power of the motor 13 is transmitted to the gear box 9 of the seat track 1 via the flexible shaft in the outer tube 22. Upon transmission of power of the gear box 9, the threaded rod in the upper rail 5 of the seat track 1 starts to rotate. Because the nut member threaded into the threaded rod is attached to the lower rail 3 and inhibited from rotating, the threaded rod starts to move in an axial direction. Hence, the upper rail 5 provided with the threaded rod moves with respect to the lower rail 1.

In addition, power of the motor 13 is also transmitted to the gear box 9' of the seat track 1' via the flexible shaft 21. As with the seat track 1, the upper rail 5' of the seat track 1' moves with respect to the lower rail 1.

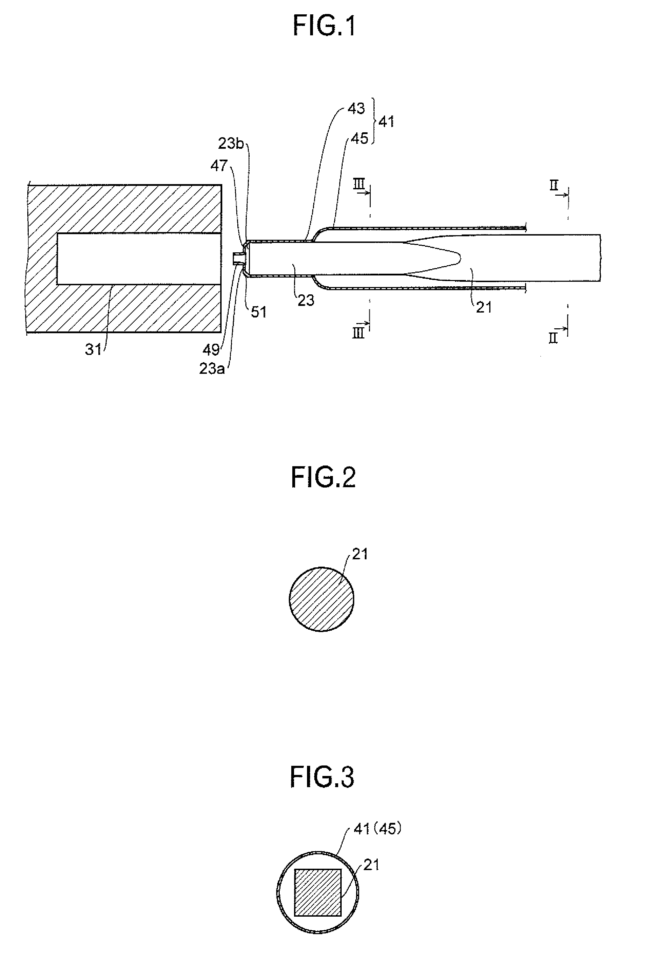

Herein, an end portion of the flexible shaft 21 will be described using Fig. 1 through Fig. 3. A cross section of the flexible shaft is of a circular shape as is shown in Fig. 2 except for an end portion. As is shown in Fig. 3, the end portion of the flexible shaft 21 is formed as a fitting portion 23 processed by processing, such as forging, so that a cross section is shaped into a square (irregular shaped cross section). Also, a chamfered portion 23b is formed at a tip end of the fitting portion 23.

Meanwhile, a hole 31 having a cross section shaped into a square (irregular shaped cross section) is formed on the side of the gear box 9'. As the fitting portion 23 of the flexible shaft 21 fits into the hole 31, rotations of the flexible shaft 21 are transmitted to the side of the gear box 9'.

In this embodiment, the fitting portion 23 of the flexible shaft 21 is covered with a heat-shrinkable tube 41 that shrinks and hardens when heated. A shrink portion 43 is formed by heating the heat-shrinkable tube 41 only on the side of the tip end portion of the fitting portion 23 and causing the heat-shrinkable tube 41 to shrink by heat so as to firmly adhere to an outer surface of the fitting portion 23 whereas a non-shrink portion 45 not subjected to heat shrinkage and therefore having a clearance to a peripheral surface of the fitting portion 23 is formed on a base end side of the fitting portion 23.

Also, in this embodiment, it is configured in such a manner that a margin portion 49 protruding from a tip end surface 23a of the fitting portion 23 is formed in the heat-shrinkable tube 41 when the heat-shrinkable tube 41 is provided to cover the fitting portion 23 of the flexible shaft 21. Hence, when the heat-shrinkable tube 41 is heated, a shear-drooped surface 47 allowed to abut on the tip end surface 23a of the fitting portion 23 is formed in the margin portion 49.

According to the configuration as above, advantages as follows can be achieved.
(1) By providing the heat-shrinkable tube 41 to the fitting portion 23 and forming the shrink portion 43 on the tip end side of the fitting portion 23 and the non-shrink portion 45 on the base end side, even in a case where there is a clearance between the outer peripheral surface of the fitting portion 23 and the inner peripheral surface of the hole 31 when the flexible shaft 21 is fitted into the hole 31, the non-shrink portion 45 of the heat-shrinkable tube 41 is pressed against and in contact with the inner surface of the hole 31, thereby absorbing the clearance between the both peripheral surfaces at the time of fitting. Hence, the occurrence of abnormal noises is suppressed. Also, transmission efficiency of a rotation torque is enhanced due to fitting leaving no clearance.
(2) The shear-drooped surface 47 of the heat-shrinkable tube 41 functions as a displacement stopping portion inhibiting the heat-shrinkable tube 41 from undergoing displacement with respect to the fitting portion 23 when the fitting portion 23 is inserted into the hole 31. More specifically, the shear-drooped surface 47 abuts on the tip end surface 23a of the fitting portion 23 and serves as a displacement stopper for the heat-shrinkable tube 41 when the fitting portion 23 is inserted into the hole 31.
(3) A chamfered opposing portion 51 of the heat-shrinkable tube 41 opposing the chambered portion 23b of the fitting portion 23 functions as a displacement stopping portion inhibiting the heat-shrinkable tube 41 from undergoing displacement with respect to the fitting portion 23 when the fitting portion 23 is inserted into the hole 31. More specifically, the chamfered opposing portion 51 abuts on the chamfered portion 23b of the fitting portion 23 and serves as a displacement stopper for the heat-shrinkable tube 41 when the fitting portion 23 is inserted into the hole 31.

It should be appreciated that the invention is not limited to this embodiment and the invention is also applicable to a connection portion between the flexible shaft 21 and the S output shaft of the motor 13. In addition, the invention is also applicable to the flexible shaft in the outer tube 23.

Further, the rotation transmitting member is not limited to a flexible shaft and the invention is also applicable to a shaft having rigidity.

Description of the reference numerals and sings
- 21:: flexible shaft
- 23:: fitting portion
- 41:: heat-shrinkable tube
- 43:: shrink portion
- 45:: non-shrink portion

## Claims

1. A rotation transmitting member including a fitting portion formed at an end portion and having an irregular shaped cross section to be fitted into a hole having an irregular shaped cross section and a heat-shrinkable tube covering the fitting portion, the rotation transmitting member being **characterized in that**:
a shrink portion of the heat-shrinkable tube caused to shrink by heat so as to firmly adhere to an outer surface of the fitting portion is formed on a tip end side of the fitting portion; and
a non-shrink portion of the heat-shrinkable tube not subjected to heat shrinkage is formed on a base end side of the fitting portion.

2. The rotation transmitting member according to claim 1, **characterized in that**:
the heat-shrinkable tube has a displacement stopping portion inhibiting the heat-shrinkable tube from undergoing displacement with respect to the fitting portion when the fitting portion is inserted into the hole.

3. The rotation transmitting member according to claim 1, **characterized in that**:
the rotation member is a flexible shaft.
